# FASCICULE DE BREVET EUROPEEN

(11) **EP 0 347 434 B1**
(45) Date de publication et mention de la délivrance du brevet: **30.06.1993**
(21) Numéro de dépôt: 88908238.4
(22) Date de dépôt: 12.09.1988
(51) Int. Cl.: B01D 47/02

(54) **EPURATEUR SILO A CIMENT**
ABLUFTREINIGER FÜR ZEMENTSILOS
AIR SCRUBBER FOR CEMENT BIN

(30) Priorité: 14.09.1987 FR 8712848
(43) Date de publication de la demande: 27.12.1989
(73) Titulaire: GROS, Henri, F-13410 Lambesc (FR)
(72) Inventeur: GROS, Henri, F-13410 Lambesc (FR)
(86) Numéro de dépôt international: FR8800447
(87) Numéro de publication internationale: WO8902307

(56) Documents cités:
- DE-A-19 000 272
- DE-B- 3 216 781
- DE-C- 54 201

## Description

L'invention concerne un dispositif pour l'épuration de l'air évacué d'un silo à ciment lors du remplissage et permettant la mise à l'air libre lors de la vidange du silo .

Actuellement l'évacuation de la poussiére des silos à ciment lors du remplissage se fait par l'intermédiaire de filtres situés le plus souvent en haut des silos ou pour certains modéles au pied du silo à ciment .

Les filtres actuels sont en tissu et fixés à un vibreur pour le nettoyage .

Le but de l'invention est de simplifier le systéme de filtre , de supprimer le tissu et les moteurs électriques et tout besoin d'entretien. Le brevet DE-C-54 201 décrit l'épuration d'air poussièreux au moyen d'un tube plongeant dans de l'eau. Le dispositif proposé se fixe sur un tube de mise à

l'air libre , en bas du silo . Si le silo comporte un filtre à son sommet le supprimer et faire descendre le long du silo un tube au côté de celui de remplissage . On fixe donc l'appareil sur ce tube et on met l'extrémité dans un bac de décantation ( obligatoire pour l'épuration de l'eau de lavage ) .

Le dispositif comporte un tube en acier inoxydable qui fait office de corps 1 avec une ou plusieurs fentes en son milieu 6 et trois fentes en haut pour permettre le serrage sur le tube de descente par l'intermédiaire d'un collier 4 . L'extrémité du tube est plongée dans le bac de décantation rempli d'eau 5 , à l'intérieur se trouve un manchon en caoutchouc 2 qui descend plus bas que les orifices et qui sert également d'étanchéité sur le tube de descente .

Lors du remplissage du silo , l'air chargé de ciment passe dans le manchon et le plaque contre le tube et ferme ainsi les fentes . L'air est donc obligé de passer dans l'eau et le ciment qui se trouve dans l'air se dépose dans le bac de décantation .

Quand on préléve du ciment dans le silo , la dépression qui se crée décolle le manchon du tube et met le silo à l'air libre par l'intermédiaire des fentes .

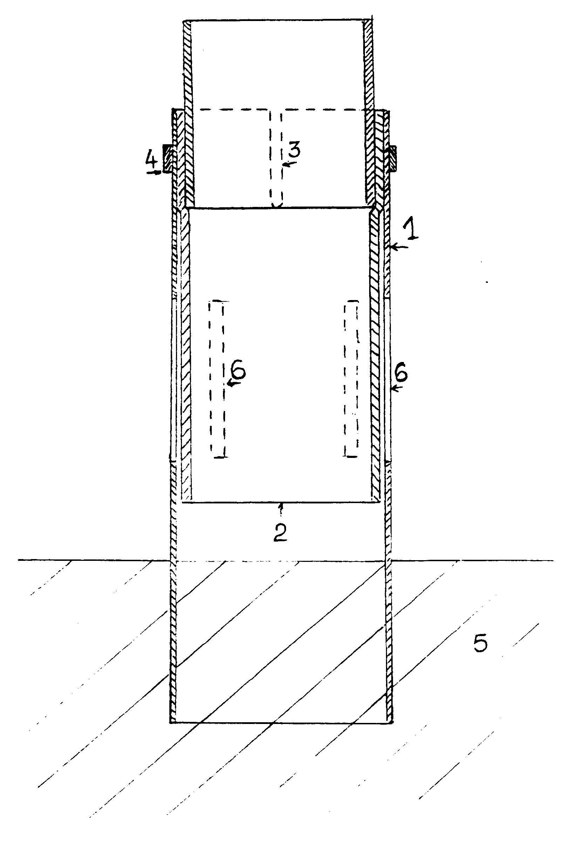

## Revendications

1. Dispositif pour épurer l'air évacué d'un silo à ciment lors du remplissage et permettant la mise à l'air libre lors de la vidange du silo, caractérisé en ce qu'il comporte:
- un premier tube (1) en acier dont la paroi latérale présente en son milieu au moins une et de préférence trois fente(s) (6) et dont l'extrémité supérieure (3) est munie de trois fentes permettant son serrage, au moyen d'un collier de serrage (4), sur un second tube communiquant avec l'intérieur du silo, l'extrémité inférieure de ce tube (1) étant destinée à plonger dans l'eau (5) d'un bac de décantation;
- un manchon (2) en caoutchouc, situé à l'intérieur du premier tube (1), qui descend plus bas que la ou les dite(s) fente(s) (6) et qui sert aussi de moyen d'étanchéité entre l'extrémité supérieure du premier tube (1) et le second tube, et qui permet une obturation de la ou des dite(s) fente(s) (6) lorsqu'il est traversé par l'air s'échappant du silo lors d'un remplissage et le dégagement de la ou des dite(s) fente(s) (6) lorsque l'air extérieur est aspiré à travers la ou les dite(s) fente(s) (6) lors d'une vidange du silo.

2. Dispositif selon la revendication 1 caractérisé en ce que le corps peut-être en acier inoxydable .

## Claims

1. Device for cleaning the air getting out of a cement bin during filling operations , and putting in the open air during the bin draining operations , including the following characteristics ;
- a steel pipe ( 1 ) with at least one and at best three slots ( 6 ) mid of its inner surface , and including three slots on its upper end ( 3 ) for its clamping , through a clamping band ( 4 ) , on a second pipe which communicates with the inside of the bin , the lower end of the pipe ( 1 ) being immersed into a decanting tank ( 5 ) .
- inside the first pipe ( 1 ) , a rubber casing ( 2 ) , going lower than the above mentionned slots ( 6 ) and insuring tightness between the upper end of the first pipe ( 1 ) and the second pipe , moreover thanks to this rubber casing the slots are closed when the air runs through it during filling operations , or on the contrary cleared during admission of outside air through the slots when the silo is emptied .

2. Device according to claim 1 with the characteristics of being made in stainless steel .

## Patentansprüche

1. Ein Richtung zur Reinigung der Abluft eines Silo während der Füllung und erlaubt den Lufteinlass bei der Ableeren .
Das erste Stahlrorh ( 1 ) hat eine Schnitt in der Mitte , am beste drei ( 6 ) , und die Ende der Schnitte ermöglichen die Befestigung des Rohres ( 4 ) mit einem Halswig auf dem zweiten Rohr , welches mit dem tank in Verbindung ist , und die zweite ( untere ) Seite des Rohres ist im Wasser getaudet , d. h. wasser eins Ablagewecken .
Ein Gummimanchette ist im inneren Teil der ersten Rohr ( 1 ) , geht weiter als die Schnitte ( 6 ) , welche erlaubt die Abdichtung zwischen das obere Teil der ersten Rohr ( 1 ) und des zweiten .
Die Gummimanchette erlaubt die Abdichtung der Schnitte ( 6 ) wenn die Luft strömt , d. h; die Abluft des Silos während einer Füllung .
Die Schnitte öffnen sich wenn die Luft geht von Aussen nach Innenn wenn das Silo geleert wird .

2. Ein Richtung nach § 1 , so dass Teil ( 1 ) kann aus Edelstaht gefertigt werden .
